# EUROPEAN PATENT APPLICATION

(11) **EP 4 516 762 A1**
(43) Date of publication of application: **05.03.2025**
(21) Application number: 23795914.3
(22) Date of filing: 03.03.2023
(51) Int. Cl.: C04B 35/117, C01F 7/442, C08K 3/22, C08K 3/30, C08K 3/34, C08K 3/38, C08L 101/00, C09K 5/14

(54) **ALUMINA-BASED THERMALLY CONDUCTIVE ROUNDED-DISC-SHAPED PARTICLES, PRODUCTION METHOD FOR SAME, THERMALLY CONDUCTIVE COMPOSITION, ARTICLE, LIQUID COMPOSITION, THERMALLY CONDUCTIVE THIN FILM, AND ELECTRONIC DEVICE MEMBER**

(30) Priority: 27.04.2022 JP 2022073469
(71) Applicant: DAINICHISEIKA COLOR & CHEMICALS MFG. CO., LTD., Tokyo 103-8383 (JP)
(72) Inventor: NISHIO, Akira, Tokyo 103-8383 (JP); YAMANE, Kenichi, Tokyo 103-8383 (JP)
(74) Representative: Vossius & Partner Patentanwälte Rechtsanwälte mbB
(86) International application number: PCT/JP2023/008166
(87) International publication number: WO 2023/210166

(57) **Abstract**

There is provided particles of an alumina-based thermally conductive oxide obtained by firing a raw material mixture containing an aluminum raw material, the raw material mixture containing no boron compound. The aluminum raw material is at least one selected from the group consisting of boehmite and aluminum hydroxide. The raw material mixture contains a glass frit and may further contain an oxide raw material. The oxide raw material is at least one selected from the group consisting of a boron compound, a titanium compound, a phosphorus compound, a tungsten compound, and a bismuth compound. A content of the glass frit in the raw material mixture is in a range from 0.5 parts by mass to 5 parts by mass, to 100 parts by mass of the aluminum raw material.

## Description

### TECHNICAL FIELD

The present invention relates to alumina-based thermally conductive rounded disc-shaped particles excellent in fillability and a method of producing the same.

### BACKGROUND ART

A number of materials have currently been studied as a thermally conductive material. As the degree of integration in semiconductor devices improves, the demand for heat dissipation is becoming stronger, and the development of materials with much higher thermal conductivity and insulation than conventional materials is becoming essential. A composite material (resin composition) obtained by kneading a thermally conductive filler into a resin is known as a material that satisfies these requirements.

Alumina is used in many situations as a filler for composite materials, because alumina is inexpensive, has good thermal conductivity and insulation, and is highly resistant to water and acid. Various shapes of alumina are known, including true spherical shapes, rounded shapes, irregular shapes, and plate shapes. Among these, the plate-shaped alumina has many uses, including as a thermally conductive filler, a glitter pigment, an abrasive, a sliding material, a lubricant, and a barrier material. When applying the plate-shaped alumina as a thermally conductive filler, there is a strong demand for alumina that has excellent kneadability (fillability) into a resin and high thermal conductivity.

There are many known methods for producing the plate-shaped alumina. Related technology includes, for instance, a method of adding a metal fluoride such as cryolite as a mineralizer to a large amount of diluent such as sodium chloride and potassium sulfate and heat-treating an aluminum raw material (Patent Literature 1). There is also a method of producing alumina particles through hydrothermal reaction of a mixed solution of an aluminum sulfate aqueous solution and a sodium hydroxide aqueous solution in an autoclave (Patent Literature 2). There are also plate-shaped particles and a method of producing the same, which claim that the addition of an aluminum raw material, shape control material, and molybdenum oxide during firing can result in high dispersibility based on zeta potential (Patent Literature 3). In addition, there is a method for producing alumina-based thermally conductive particles using an aluminum raw material and a frit or a metal oxide (Patent Literature 4).

### CITATION LIST

### PATENT LITERATURE(S)

Patent Literature 1: JP 2006-515557 A
Patent Literature 2: JP 2008-195569 A
Patent Literature 3: JP 2019-123664 A
Patent Literature 4: JP 2018-145025 A

### SUMMARY OF THE INVENTION

### PROBLEM(S) TO BE SOLVED BY THE INVENTION

Alumina has a high Mohs hardness, and puts a load on blades and a shaft of an extruder, which makes it difficult to knead alumina into a resin composition or the like. In addition, component parts worn by alumina are liable to be mixed in, causing contamination. Because of its shape, plate-shaped alumina is used in a wide range of applications, including brightening materials, lubricants, and sliding materials. However, when plate-shaped alumina is applied to thermal conductive materials, its fillability into a resin tends to be inferior to that of other types of alumina due to its shape.

In the method using the diluent and mineralizer in Patent Literature 1 and the synthesis using the hydrothermal method in Patent Literature 2, particles with a small particle size and high aspect ratio are produced. However, in patent Literature 1, aluminum hydroxide as a raw material needs to be pulverized in advance, and a large amount of diluent needs to be removed by washing with water after the heat treatment. The diluent is also a component that easily corrodes steel plates, increasing a burden on the manufacturing equipment. The hydrothermal method in Patent Literature 2 requires special manufacturing equipment. In addition, since reaction occurs at high temperature and high pressure, the size of the equipment is limited. Therefore, the amount that can be produced at one time is small in Patent Literature 2.

In the method of Patent Literature 3, in which an aluminum raw material, shape control material, and molybdenum oxide are added during firing, the amount of molybdenum added reaches several tens of percent of the aluminum raw material. Most of the molybdenum vaporizes during firing, but some remains and the particle surfaces are washed to reduce the residual molybdenum to some extent. However, since molybdenum, which has been pointed out as being harmful to health, is contained in the particles in Patent Literature 3, care must be taken when handling products that contain these particles. In addition, Patent Literature 3 mentions no aluminum raw material, and thus does not explain the effect of the difference in aluminum raw materials used. Furthermore, although Patent Literature 3 describes that zeta potential measurement may reveal that the particles have high dispersibility. Patent Literature 3, however, does not describe an actual example in which the particles were applied to a polymer material or the like. Also, there is no experimental data on thermal conductivity, so it is unclear how much particles can be added to a polymer composition and how the thermal conductivity changes when the particles are added.

The alumina-based thermally conductive particles using the glass frit and metal oxide described in Patent Literature 4 use similar materials, but the particles in Patent Literature 4 are thought to be spherical in shape. Although Patent Literature 4 describes that the particles can be controlled to have any other shape, particles in any other shape than spherical were not actually produced, and a technique for changing the shape is not specifically described. In addition, Patent Literature 4 fails to describe the amount of filling and fillability of the particles into a resin composition or the like.

The invention has been made in light of the problems associated with such related techniques, and an object of the invention is to provide alumina-based thermally conductive rounded disc-shaped particles that are excellent in thermally conductivity, chemical resistance, water resistance, electrical insulation, and kneadability (fillability) into a resin and that enable production of materials and articles such as resin compositions with excellent moldability, as well as a method producing the same. In the invention, it has been found out that excellent crystallinity is obtained and an aspect ratio and a particle surface condition are adjustable by using a glass frit and, occasionally, an oxide raw material. In particular, according to the method of the invention, it is possible to easily provide a disc shape of which thickness is greater than that of known plate-shaped alumina, and since the disc shape is a rounded disc-shape, its aspect ratio is not so large. In addition, the particles of the invention are also characterized by having a rounded shape as a whole without sharp corners, which improves its kneadability (fillability) into a resin. The problem to be solved by the invention includes providing a thermally conductive composition and an article using the alumina-based thermally conductive rounded disc-shaped particles.

### MEANS FOR SOLVING THE PROBLEM(S)

According to aspects of the invention, there are provided alumina-based thermally conductive rounded disc-shaped particles and a method of producing the same, as follows.
[1] Alumina-based thermally conductive rounded disc-shaped particles being particles of an alumina-based thermally conductive oxide obtained by firing a raw material mixture containing an aluminum raw material and a glass frit, the raw material mixture containing no boron compound, the aluminum raw material being at least one selected from the group consisting of boehmite and aluminum hydroxide, a deformation point of the glass frit being in a range from 300 degrees C to 800 degrees C, a content of the glass frit in the raw material mixture being in a range from 0.5 parts by mass to 5 parts by mass, to 100 parts by mass of the aluminum raw material, and primary particles of the alumina-based thermally conductive oxide having an average particle size in a range from 1 µm to 50 µm, having an average thickness in a range from 0.1 µm to 5 µm, having an aspect ratio of more than 1 and 50 or less, and having a rounded disc shape.
[2] The alumina-based thermally conductive rounded disc-shaped particles according to [1], in which the raw material mixture further contains an oxide raw material other than the glass frit, and the oxide raw material contains at least one selected from the group consisting of a titanium compound, a phosphorus compound, a tungsten compound, and a bismuth compound.
[3] The alumina-based thermally conductive rounded disc-shaped particles according to [1] or [2], in which the alumina-based thermally conductive oxide is colored by containing at least one element selected from the group consisting of iron, cobalt, copper, manganese, and nickel.
[4] The alumina-based thermally conductive rounded disc-shaped particles according to any one of [1] to [3], in which the glass frit contains no lead.
[5] A method of producing the alumina-based thermally conductive rounded disc-shaped particles according to any one of [1] to [4], the method including: mixing a glass frit and at least one aluminum raw material selected from the group consisting of boehmite and aluminum hydroxide to obtain a raw material mixture; and firing the raw material mixture, in which a content of the glass frit in the raw material mixture is in a range from 0.5 parts by mass to 5 parts by mass, to 100 parts by mass of the aluminum raw material, and in the firing of the raw material mixture, the raw material mixture is fired in a range from 1,000 degrees C to 1,400 degrees C in air.
   Further, according to other aspects of the invention, there are provided a thermally conductive composition and an article, as follows.
[6] A thermally conductive composition containing the alumina-based thermally conductive rounded disc-shaped particles according to any one of [1] to [4], and a thermally conductive filler.
[7] An article containing the alumina-based thermally conductive rounded disc-shaped particles according to any one of [1] to [4].
[8] The article according to [7], further containing a thermally conductive filler.
[9] The article according to [7] or [8], in which the article is any of a gravure ink, a coating liquid, a resin composition, and an adhesive composition.
   Furthermore, according to other aspects of the invention, there are provided a liquid composition, a thermally conductive thin film, and a member for an electronic device, as follows.
[10] A liquid composition used to form a thermally conductive thin film, the liquid composition containing a thermally conductive component containing the alumina-based thermally conductive rounded disc-shaped particles according to any one of [1] to [4], a film-forming resin, and a liquid medium.
[11] The liquid composition according to [10], in which the thermally conductive component further contains a thermally conductive filler, and the thermally conductive filler is at least one selected from the group consisting of barium sulfate, talc, and boron nitride.
[12] The liquid composition according to [10] or [11], in which a content of the thermally conductive component to 100 parts by mass of the film-forming resin is in a range from 50 parts by mass to 600 parts by mass.
[13] The liquid composition according to any one of [10] to [12], in which the film-forming resin is at least one solvent soluble resin selected from the group consisting of an acrylic-based resin, a urethane-based resin, a urea-based resin, an epoxy-based resin, a rubber-based resin, a fluorine-based resin, a polyamide-based resin, a polyimide-based resin, a silicone-based resin, a cellulose-based resin, and a thermoplastic elastomer.
[14] A thermally conductive thin film formed by applying the liquid composition according to any one of [10] to [13].
[15] A member for an electronic device, including a metal member and the thermally conductive thin film according to [14], the thermally conductive thin film being disposed on a surface of the metal member.

According to the aspects of the invention, there can be provided alumina-based thermally conductive rounded disc-shaped particles that are excellent in thermally conductivity, chemical resistance, water resistance, electrical insulation, and kneadability (fillability) into a resin and enable production of materials and articles such as resin compositions with excellent moldability, as well as a method producing the same. In addition, according to the aspects of the invention, there can be provided a thermally conductive composition and an article using the alumina-based thermally conductive rounded disc-shaped particles.

### BRIEF DESCRIPTION OF DRAWINGS

Fig. 1 is an electron microscope photograph showing alumina-based thermally conductive rounded disc-shaped particles obtained in Example 2.
Fig. 2 is an electron microscope photograph showing alumina-based thermally conductive rounded disc-shaped particles obtained in Example 19.
Fig. 3 is an electron microscope photograph showing alumina-based thermally conductive rounded disc-shaped particles obtained in Example 26.
Fig. 4 is an electron microscope photograph showing alumina-based thermally conductive particles obtained in Comparative 2.

### DESCRIPTION OF EMBODIMENT(S)

### Alumina-Based Thermally Conductive Rounded Disc-Shaped Particles

An exemplary embodiment of the invention will be described below, but the invention is not limited to the following exemplary embodiment. Alumina-based thermally conductive rounded disc-shaped particles according to the exemplary embodiment (hereinafter occasionally simply referred to as "rounded disc-shaped particles") are obtained by firing a raw material mixture containing an aluminum raw material. The aluminum raw material is at least one selected from the group consisting of boehmite and aluminum hydroxide. The raw material mixture further contains a glass frit, and possibly contains at least one oxide raw material other than the glass frit selected from the group consisting of a boron compound, a titanium compound, a phosphorus compound, a tungsten compound, and a bismuth compound. The content of glass frit in the raw material mixture is in a range from 0.5 parts by mass to 5 parts by mass, to 100 parts by mass of the aluminum raw material. In the following, the rounded disc-shaped particles according to the exemplary embodiment will be described in detail.

Resins generally have low thermal conductivity. Thus, in order to improve the thermal conductivity of resin articles, a technique of adding a large amount of thermally conductive filler, such as alumina, to a resin is typically employed. The thermal conductivity peculiar to the thermally conductive filler is exhibited by blending the thermally conductive filler with the resin and dispersing it in the resin so that particles of the thermally conductive filler have contact points with each other. However, in order to achieve higher thermal conductivity, alumina with a larger particle size or true spherical alumina is used to facilitate dispersion of a large amount of alumina into the resin. However, when alumina designed as above is blended with the resin, the contact points between the alumina are reduced, and thermal conductivity is not likely to be greatly improved. On the other hand, when alumina with a smaller particle size is added to the resin, kneadability (fillability) into the resin decreases, making it difficult to disperse a large amount of alumina in the resin and thus making it difficult to improve the thermal conductivity.

Plate-shaped alumina has shape anisotropy, which increases the opportunity for surface contact, resulting in higher thermal conductivity in the plane direction. The plate-shaped alumina, however, is often inferior to true spherical or crushed alumina in terms of the fillability into a resin due to its plate-like shape, and the plate-shaped alumina is also likely to be subject to formulation restrictions to achieve high thermal conductivity.

The rounded disc-shaped particles according to the exemplary embodiment are obtained by firing a raw material mixture containing an aluminum raw material such as aluminum hydroxide, a glass frit, and possibly an oxide raw material other than the glass frit at a predetermined ratio. The glass frit, also simply referred to as a frit or multicomponent glass, is used primarily in the ceramic industry, but the inventors have found it suitable for producing shape anisotropy in alumina. The glass frit that melts at a firing temperature or lower is favorable, and it is inferred that this melting defines a crystal direction of alumina during crystal growth of alumina, resulting in the rounded disc-shaped particles according to the exemplary embodiment. The glass frit melts and also serves as a mineralizer, which has the advantage of obtaining α-alumina at a lower temperature than usual. Addition of a small amount of glass frit easily provides the rounded disc-shaped α-alumina. Further, coupled with the action as the mineralizer, the glass frit also has the effect of smoothing the surface, providing the rounded disc-shaped particles with high wettability to resin. This makes it possible to produce materials or articles, such as resin compositions with improved thermal conductivity and excellent moldability. In addition, it is also possible to create more contact points between particles of fillers in combination with other thermally conductive fillers that have any other shape than the rounded disc, such as spherical or polygonal, which is one of favorable uses.

The glass frit includes several metals uniformly fused together. Even if the oxides of these constituent metals are added separately, the melting points of the respective metal oxides are different and the same effect as in the exemplary embodiment is not provided. The inventors have confirmed the need to use the glass frit, which is multicomponent glass.

It should be noted that, if the glass frit that is a glass component is added excessively, the fused glass frit causes the particles to be fused with each other, resulting in particles with poor dispersibility, such as large particles or particles in the form of agglomerates. The inventors thus have specified a certain range for the amount of glass frit used.

In addition to the glass frit, an oxide raw material other than the glass frit may be further mixed. These components are used to supplement the glass frit component. The oxide raw material is added to solve problems such as when the particles tend to agglomerate, when α-alumina is difficult to produce, or when the aspect ratio needs to be adjusted.

Regarding the rounded disc-shaped particles according to the exemplary embodiment, primary particles need to satisfy the following conditions.

The average particle size needs to be in a range from 1 µm to 50 µm. When the average particle size is less than 1 µm, the kneadability (fillability) into the resin is reduced. When the average particle size exceeds 50 µm, the effect of improving thermal conductivity is insufficient. From this perspective, the average particle size is preferably in a range from 1.1 µm to 30 µm, more preferably in a range from 1.2 µm to 20 µm.

The average thickness needs to be in a range from 0.1 µm to 5 µm. When the average thickness is less than 0.1 µm, the kneadability into the resin is reduced. When the average thickness exceeds 5 µm, particles with a high aspect ratio are difficult to produce. From this perspective, the average thickness is preferably in a range from 0.2 µm to 3 µm, more preferably in a range from 0.3 µm to 1.5 µm.

The aspect ratio needs to be more than 1 and 50 or less. The aspect ratio is calculated by dividing a value of the average particle size by a value of the average thickness (average particle size / average thickness). When the aspect ratio is 1, no shape anisotropy is provided. Thus, the effect of thermal conductivity, especially in the form of a thin film or the like, cannot be exhibited sufficiently. When the aspect ratio exceeds 50, fillability into the resin deteriorates, making it difficult to use with high fillability required for thermal conductive materials. From this perspective, the aspect ratio is preferably in a range from 2 to 45, more preferably in a range from 3 to 40, and still more preferably in a range from 3.5 to 36.

The particle shape needs to be rounded disc-shaped. The particle shape can be confirmed by an observation result under an electron microscope.

Herein, the average particle size can be measured using a laser diffraction particle size distribution analyzer. Specifically, measurement can be performed by a method described later in Examples. The average particle size can also be measured from an observation result under an electron microscope. The measured value with this method is almost the same as that obtained with the laser diffraction particle size distribution analyzer.

The average thickness can be measured by an observation result under an electron microscope, as in the average particle size. Specifically, measurement can be performed by a method described later in Examples.

The kneadability (fillability) of the rounded disc-shaped particles according to the exemplary embodiment into the resin is favorable for a variety of resins. In the exemplary embodiment, as an example, evaluation is performed in terms of the filling amount of the particles to an epoxy resin, which is often used for electronic components. For the evaluation method, the particles are preferably filled at 250 parts by mass or more, more preferably at 300 parts by mass or more, to 100 parts by mass of the epoxy resin. At less than 250 parts by mass, the affinity to the resin is low and dispersion is poor. Further, since the amount of thermally conductive particles to the resin is small, sufficient thermal conductivity cannot be achieved. The filling amount is preferably 1,000 parts by mass or less. At more than 1,000 parts by mass, the amount of rounded disc-shaped particles is too high, resulting in poor moldability, processability, and strength of the resin.

For the thermal conductivity of the rounded disc-shaped particles in the exemplary embodiment, a numerical value obtained when 70 parts by mass of the particles are added to 30 parts by mass of the epoxy resin is used as an index. The thermal conductivity of the epoxy resin composition in such a case is preferably 0.9 W/m•K or more. Accordingly, high thermal conductivity is provided when used in electronic components, achieving a desired heat dissipation performance.

The rounded disc-shaped particles according to the exemplary embodiment are excellent in thermal conductivity and in chemical resistance, water resistance, and electrical insulation. Further, the rounded disc-shaped particles according to the exemplary embodiment have high wettability to the resin and good kneadability (fillability) into the resin, enabling the production of a material such as a resin composition with excellent moldability and an article such as a coating material and an adhesive composition.

### Aluminum Raw Material

The rounded disc-shaped particles according to the exemplary embodiment are obtained by firing a raw material mixture containing an aluminum raw material, a glass frit, and possibly an oxide raw material other than the glass frit, and preferably containing α-alumina as a main component. The aluminum raw material is at least one selected from the group consisting of aluminum hydroxide and boehmite.

Boehmite and/or aluminum hydroxide is usable as the aluminum raw material. The shape and particle size of the aluminum raw material are not particularly limited, but considering the dispersibility and the like of the rounded disc-shaped particles, an average particle size of the aluminum raw material is preferably in a range from 1 µm to 50 µm. More specific shapes of the aluminum raw material include spherical, amorphous, and the like. Alumina is not suitable for use as the aluminum raw material, because the use of alumina as the aluminum raw material makes it difficult to produce the rounded disc-shaped particles referred to in the exemplary embodiment.

### Raw Material Mixture

The raw material mixture used with the aluminum raw material may contain an oxide raw material other than the glass frit, in addition to the glass frit. This oxide raw material is at least one selected from the group consisting of a boron compound, a titanium compound, a phosphorus compound, a tungsten compound, and a bismuth compound. Those can provide the effects of improving the dispersibility of rounded disc-shaped particles, promoting formation of α-alumina, or adjusting the aspect ratio.

### Glass Frit

The glass frit includes several elements. Substances that are amorphous do not have a melting point, but instead have a softening point and a deformation point (yielding point). The exemplary embodiment focuses on the deformation point. The deformation point of the glass frit needs to be in a range from 300 degrees C to 800 degrees C. When the deformation point is 300 degrees C or less, the ratio of particle fusing increases, which is unfavorable because of poor dispersibility of particles. When the deformation point is 800 degrees C or more, it is difficult to form the rounded disc-shaped particles according to the exemplary embodiment, which is unfavorable. From this perspective, the deformation point of the glass frit is preferably in a range from 350 degrees C to 600 degrees C, more preferably in a range from 380 degrees C to 550 degrees C. Preferably, the glass frit contains silicon and boron and further contains at least one element selected from the group consisting of lithium, sodium, potassium, magnesium, calcium, aluminum, zinc, fluorine, titanium, and phosphorus. The use of the glass frit with such a composition produces the rounded disc-shaped particles, which improves the wettability to the resin and further enhances the kneadability (fillability) into the resin. Further, from the standpoint of environmental friendliness, the glass frit preferably contains no lead.

### Oxide Raw Material

The boron compound, which is an example of the oxide raw material other than the glass frit, may be, for instance, boric acid, sodium borate, ammonium borate, magnesium borate, and lithium borate. Examples of the titanium compound include rutile-type titanium oxide and anatase-type titanium oxide. Examples of the phosphorus compound include orthophosphoric acid, metaphosphoric acid, sodium orthophosphate, and sodium metaphosphate. Examples of the tungsten compound include tungsten oxide, ammonium tungstate, and sodium tungstate. Examples of the bismuth compound include bismuth oxide, basic bismuth carbonate, and sodium bismuthate. Of the above, boric acid, sodium tungstate, bismuth oxide, or basic bismuth carbonate is preferably used, because those provide rounded disc-shaped particles with high fillability. In addition, containing at least one element selected from the group consisting of iron, cobalt, copper, manganese, and nickel can provide colored, thermally conductive, rounded disc-shaped particles.

The oxide raw material may be any material that thermally decomposes or undergoes a phase transition to produce an oxide. Other than the oxide, a hydroxide, oxoacid salt, carbonate, hydrogencarbonate, ammonium salt, or the like is usable. By using the component that thermally decomposes or undergoes the phase transition to produce an oxide as the oxide raw material, the particle size can be controlled, the reaction can be homogenized, and the particle surface can be made smooth.

The content of the glass frit in the raw material mixture needs to be in a range from 0.5 parts by mass to 5 parts by mass, to 100 parts by mass of the aluminum raw material. When the content of the glass frit relative to 100 parts by mass of the aluminum raw material is less than 0.5 parts by mass, the development of the rounded disc shape is weak, and the effect as rounded disc-shaped particles cannot be expected. When the content of the glass frit relative to 100 parts by mass of the aluminum raw material exceeds 5 parts by mass, particles are fused with each other with melting of the glass frit, resulting in rounded disc-shaped particles with poor dispersibility. From this perspective, the content of the glass frit in the raw material mixture is preferably more than 0.5 parts by mass and 3 parts by mass or less, more preferably 0.8 parts by mass or more and less than 3 parts by mass, and still more preferably in a range from 1 parts by mass to 2 parts by mass, to 100 parts by mass of the aluminum raw material.

The content of the oxide raw material other than the glass frit in the raw material mixture is preferably in a range from 0.1 parts by mass to 6 parts by mass, to 100 parts by mass of the aluminum raw material. When the content of the oxide raw material other than the glass frit relative to 100 parts by mass of the aluminum raw material exceeds 6 parts by mass, the development of the rounded disc shape of the grass frit may be adversely affected, and the thermal conductivity even tends to decrease. When the content of the oxide raw material other than the glass frit relative to 100 parts by mass of the aluminum raw material is less than 0.1 parts by mass, the desired rounded disc-shaped particles tend not to be obtained. From this perspective, the content of the oxide raw material other than the glass frit in the raw material mixture is more preferably in a range from 0.2 parts by mass to 3 parts by mass, and still more preferably in a range from 0.3 parts by mass to 2 parts by mass, to 100 parts by mass of the aluminum raw material.

By setting the contents of the glass frit and the oxide raw material other than the glass frit to 100 parts by mass of the aluminum raw material in the above ranges, the rounded disc-shaped particles according to the exemplary embodiment can have excellent thermal conductivity, chemical resistance, water resistance, and electrical insulation while maintaining various resistances, can have excellent kneadability (fillability) into the resin, and can enable the production of materials and articles such as resin compositions with excellent moldability.

The rounded disc-shaped particles according to the exemplary embodiment have little effect on the thermal conductivity of alumina, because the contents of the glass frit and the oxide raw material other than the glass frit relative to the aluminum raw material can be designed to be small. In addition, the rounded disc-shaped particles according to the exemplary embodiment can be produced by a simple process of firing a powder mixture, which also provides a cost advantage. Furthermore, since the rounded disc-shaped particles of the exemplary embodiment have good fillability into the resin, when considering their application to thermally conductive fillers, it is possible to solve a problem of conventional plate-shaped particles, which is the difficulty in designing with a high addition amount of the filler.

The rounded disc-shaped particles according to the exemplary embodiment are suitable for use as a thermal conductive filler, but can also be used in other applications that match the conditions of use, such as abrasives, reflective materials, sliding materials, gas barrier materials, lubricants, hardness reinforcing materials, or mechanical strength reinforcing materials, which are applications for rounded disc-shaped alumina.

### Surface Treatment

The rounded disc-shaped particles according to the exemplary embodiment may be surface treated. Surface-treated rounded disc-shaped particles have improved affinity and dispersibility with the resin, and therefore, an article such as a resin composition with excellent thermal conductivity can be produced. Examples of a compound (treatment agent) used for the surface treatment include fatty acids, fatty acid esters, fatty acid metal salts, phosphate esters, phosphate ester metal salts, silane coupling agents, surfactants, polymer flocculants, titanates, and silicone. One or more of these treatment agents can be used alone or in combination. The amount of compound(s) used for the surface treatment is preferably in a range from 0.01 parts by mass to 5 parts by mass, to 100 parts by mass of the rounded disc-shaped particles. Exemplary treatment methods include a method of adding a treatment agent to powder of rounded disc-shaped particles, mixing the resultant mixture, and performing the treatment, and a method of adding water into powder of rounded disc-shaped particles, dispersing the powder, and then adding a treatment agent thereto, followed by filtration and drying.

### Use of Rounded Disc-Shaped Particles

Among the preferred uses of the rounded disc-shaped particles according to the exemplary embodiment, addition to various plastics, such as thermoplastic resins and thermosetting resins, for the purpose of imparting thermal conductivity is effective. As the thermoplastic resin, for example, a polyethylene resin, polypropylene resin, ethylene-propylene copolymer, ethylene-vinyl acetate copolymer, acrylonitrile-ethylene-styrene copolymer, acrylonitrile-butadiene-styrene copolymer, acrylonitrile-styrene copolymer, polyvinyl chloride resin, polystyrene resin, polyacrylonitrile resin, polyamide resin, thermoplastic polyimide resin, thermoplastic urethane resin, polyaminobismaleimide resin, polyamideimide resin, polyetherimide resin, polymethylmethacrylate resin, polyvinyl acetate resin, polycarbonate resin, polyacetal resin, polyethylene terephthalate resin, polybutylene terephthalate resin, polyphenylene oxide resin, polyphenylene sulfide resin, polysulfone resin, polyethersulfone resin, polyetheretherketone resin, polyarylsulfone resin, bismaleimidotriazine resin, polymethylpentene resin, fluoride resin, liquid crystal polymer, olefin-vinyl alcohol copolymer, ionomer resin, and polyarylate resin can be used. One or more of the thermoplastic resins can be used alone or in combination. As the thermosetting resin, for example, a phenol resin, urea resin, epoxy resin, melamine resin, silicone resin, polyurethane resin, unsaturated polyester resin, alkyd resin, polyimide resin, acrylic resin, and (modified) polyphenylene ether can be used. One or more of the thermosetting resins can be used alone or in combination.

### Method of Producing Alumina-Based Rounded Disc-Shaped Particles

Subsequently, a method of producing the rounded disc-shaped particles according to the exemplary embodiment will be described. The method of producing the rounded disc-shaped particles according to the exemplary embodiment includes a step of mixing an aluminum raw material, a glass frit, and possibly an oxide raw material other than the glass frit to obtain a raw material mixture (Step (1)) and a step of firing the raw material mixture (Step (2)).

This production method makes it easy to obtain a thicker disc shape than conventional plate-shaped alumina, and also makes it easy to obtain a rounded disc shape of which aspect ratio is not so large. The reason thereof is not necessarily clear, but the inventors surmise as follows. Specifically, it is inferred that melting the glass frit at a firing temperature or lower defines the crystal direction of alumina during the crystal growth of alumina, resulting in the rounded disc-shaped particles according to the exemplary embodiment.

In Step (1), an aluminum raw material, a glass frit, and possibly an oxide raw material other than the glass frit are mixed. A device for mixing the aluminum raw material and the oxide raw material may be a machine such as a pot mill, Henschel mixer, air mix, conical blender, planetary ball mill, vibration mill, ribbon mixer, and vertical blender. The respective components are mixed by such a machine, and the resultant mixture is fired. It is only necessary to mix the respective components so that the respective components become uniform, and it is not necessary to pulverize the particles of each component.

The content of each component in the raw material mixture is as described above.

In Step (2), the raw material mixture obtained in Step (1) is fired at a temperature in a range from 1,000 degrees C to 1,400 degrees C. Preferably, the raw material mixture is fired in a range from 1,100 degrees C to 1,300 degrees C. Firing allows the aluminum raw material to be converted into crystallized α-alumina. When the firing temperature is less than 1,000 degrees C, it is difficult to form an α-alumina structure. The thermal conductivity of transition alumina is lower than that of α-alumina, and thus firing is preferably performed to form α-alumina. A firing temperature exceeding 1,400 degrees C does not significantly change the properties of the resulting rounded disc-shaped particles, which is a waste of energy consumption. After firing, the fired product is disintegrated (crashed), if necessary, resulting in the alumina-based thermally conductive rounded disc-shaped particles according to the exemplary embodiment. Any known method is adoptable for disintegration with the use of various known machines such as a hammer mill, roll mill, ball mill, jet mill, bead mill, or vibration mill.

### Thermally Conductive Composition

It is also preferred that, the rounded disc-shaped particles according to the exemplary embodiment and any other thermally conductive filler, such as alumina, boron nitride, graphite, zinc oxide, barium sulfate, talc, and magnesium oxide, are used in combination in a thermally conductive composition. The details are described below.

Typical fillers are added to materials such as a resin, rubber, and coating material to improve strength, functionality, and the like. As the content of thermally conductive filler increases, the melt flowability and mechanical strength of materials such as a resin typically decrease. In addition, when carbon-based fillers with conductivity are blended in the resin, insulation inherent to the resin are likely to be impaired. Ceramic-based fillers have insulation, but low thermal conductivity. Examples of the thermally conductive filler include metallic fillers such as silver, copper, aluminum, and iron; inorganic fillers such as alumina, magnesia, silica, boron nitride, aluminum nitride, silicon carbide, boron carbide, and titanium carbide; and carbon-based fillers such as diamond and graphite. Fillers such as alumina, magnesium oxide, zinc oxide, silica, boron nitride, aluminum nitride, and diamond are considered to be preferred in electronic devices that require high electrical insulation. However, these fillers have many problems in terms of water resistance, chemical resistance, hardness, and electrical insulation.

In contrast, the rounded disc-shaped particles according to the exemplary embodiment can be suitably used as an improved filler because the weaknesses of the various fillers mentioned above have been improved and the rounded disc-shaped particles according to the exemplary embodiment have excellent properties. Also preferably, the rounded disc-shaped particles according to the exemplary embodiment are used together with the various thermally conductive fillers mentioned above to compensate for the weaknesses of existing thermally conductive fillers. That is, when using the rounded disc-shaped particles according to the exemplary embodiment in a thermally conductive composition containing the various thermally conductive fillers described above, the rounded disc-shaped particles according to the exemplary embodiment are preferably prepared according to the desired properties. The rounded disc-shaped particles according to the exemplary embodiment can be colored by adding at least one element selected from the group consisting of iron, cobalt, copper, manganese, and nickel, without adding pigments or dyes.

### Article

Examples of the article according to the exemplary embodiment includes articles (thermally conductive articles, thermally conductive materials), such as gravure inks, coating liquids, resin compositions, and adhesive compositions, containing the aforementioned rounded disc-shaped particles. Also preferably, the article according to the exemplary embodiment further contains the various thermally conductive fillers mentioned above, if necessary.

### Gravure Ink

The rounded disc-shaped particles according to the exemplary embodiment can be added to a gravure ink, which is used as a topcoat agent for battery packaging materials and the like. The content of the rounded disc-shaped particles in the gravure ink is preferably in a range from 5 mass% to 80 mass%, more preferably in a range from 10 mass% to 50 mass%, to the whole gravure ink. Using such a gravure ink (the topcoat agent for battery packaging materials) results in battery packaging materials with high thermal conductivity and high thermal emissivity as well as excellent chemical resistance such as acid resistance.

### Coating Liquid

The rounded disc-shaped particles according to the exemplary embodiment can be added to a coating liquid such as a coating material. The coating liquid may also be used as a preparation for coloration obtained by mixing and dispersing a coloring agent, a resin for forming a film or molded product, an organic solvent, and the like together with the rounded disc-shaped particles in a vehicle. The content of the rounded disc-shaped particles in the coating liquid is preferably in a range from 5 mass% to 80 mass%, more preferably in a range from 10 mass% to 70 mass%, to the whole coating liquid. The coating film or the coating product formed using the coating liquid prepared as described above has excellent water resistance, chemical resistance, and insulation, retains strength, and is excellent in thermal conductivity.

Specific examples of the resin that can be contained in the coating liquid include polyolefin-based, polyester-based, polystyrene-based, acrylic-based, fluorine-based, polyamide-based, cellulose-based, polycarbonate-based, or polylactic acid-based thermoplastic resins; and urethane-based, phenolic-based, or silicone-based thermosetting resins. These resins may be emulsions.

Specific examples of a liquid medium that can be contained in the coating liquid include water, methanol, ethanol, butanol, acetone, methyl ethyl ketone, methyl isobutyl ketone, toluene, xylene, butyl acetate, and cyclohexane. Two or more of these liquid media may be used in combination.

The coating liquid may contain "other components" selected according to the purpose to the extent that the object of the invention is not impaired. Specific examples of "other components" include antioxidants, UV absorbers, light stabilizers, dispersants, antistatic agents, lubricants, and disinfectants.

Conventional known methods can be employed to apply the coating liquid. Specific examples thereof include spray coating, brush coating, electrostatic coating, curtain coating, coating using a roll coater, and immersion coating. In addition, conventional known methods can be employed to dry the coating liquid after coating to form a film. Specifically, methods such as natural drying or baking may be selected and employed as appropriate depending on the properties of the coating liquid and other factors.

Using the coating liquid results in a coating film or a coating product obtained by applying the coating liquid to a base material. As the base material, a metal, glass, a natural resin, a synthetic resin, ceramics, wood, paper, fiber, non-woven fabric, woven fabric, leather, or the like can be selected according to the purpose. The coating film thus given functionality can be used in various industries such as manufacturing, agriculture, mining, or fishing, in addition to household use. There are no restrictions on the shape of coating, which can be selected according to the purpose, such as a sheet form or a film form.

### Resin Composition

A resin composition is obtained by blending the rounded disc-shaped particles according to the exemplary embodiment with a resin such as a polyamide resin or polyolefin resin. More specifically, the resin composition can be obtained by blending and mixing the rounded disc-shaped particles with the resin, along with other additives as needed, in accordance with a known method. In addition, a predetermined resin molded product can be produced by molding the obtained resin composition with an extruder. The content of the rounded disc-shaped particles in the resin composition is preferably in a range from 5 mass% to 95 mass%, to the whole resin composition. Setting the content of the rounded disc-shaped particles in the above range results in the resin composition that has more excellent water resistance, chemical resistance, and insulation, further retains strength, and is more excellent in moldability. When the content of the rounded disc-shaped particles exceeds 95 mass%, strength and moldability may decrease. When the content of the rounded disc-shaped particles is less than 5 mass%, thermal conductivity may be insufficient.

The method of adding the rounded disc-shaped particles to the resin is not particularly limited, and any known method can be employed. For instance, in addition to the method of directly blending the rounded disc-shaped particles with the resin, followed by kneading and molding, it may be employed a method of using a composition (master batch) in which the rounded disc-shaped particles are dispersed in advance in the resin, lubricant, or the like, at high concentrations. Exemplary other additives include antioxidants, UV absorbers, antistatic agents, antibacterial agents, stabilizers, cross-linking agents, plasticizers, lubricants, mold release agents, flame retardants, and inorganic fillers such as talc, alumina, clay, and silica. Metal soap, polyethylene wax, or the like can also be used as a dispersion aid for the rounded disc-shaped particles. Examples of the metal soap include lithium stearate, magnesium stearate, zinc stearate, calcium stearate, magnesium palmitate, calcium oleate, and cobalt oleate. As the polyethylene wax, various types of polyethylene wax, such as general polymerized, decomposed, or modified types, can be used.

Various organic and inorganic pigments can also be blended as coloring agents in the coating liquid and the resin composition described above. Exemplary coloring agents include organic pigments such as phthalocyanine-based pigments, azo-based pigments, azomethine-based pigments, isoindolinone-based pigments, quinacridone-based pigments, anthraquinone-based pigments, dioxazine-based pigments, and perinone/perylene-based pigments; complex oxide-based pigments other than black; titanium oxide-based pigments such as titanium oxide-based white pigments, titanium oxide-based yellow pigments, and titanium oxide-based black pigments; and inorganic pigments such as carbon black, ultramarine, and colcothar. Exemplary phthalocyanine-based pigments include brominated phthalocyanine blue pigments and phthalocyanine green pigments. Exemplary azo-based pigments include polycondensed azo-based pigments and azomethine azo-based pigments.

In addition, the resin composition can also be obtained by melting and kneading a masterbatch compound in which the rounded disc-shaped particles, various pigments, additives, and the like are blended in a resin for a compound, using an extruder or similar machine. More specifically, the resin composition can be obtained, for instance, by (i) a method of blending the rounded disc-shaped particles and dispersion aid in a resin for a compound, adding other additives as necessary, and mixing the mixture using a mixer such as a Henschel mixer; (ii) a method of kneading the masterbatch compound using a kneader or heated double-roll mill, cooling the compound, and pulverizing the compound into coarse powder using a pulverizer; and (iii) a method of feeding the masterbatch compound to an extruder and extruding the compound to form beads, columns, or other shapes. Molding methods are not particularly limited, and examples thereof include injection molding, extrusion molding, heat compression molding, blow molding, inflation molding, and vacuum molding.

### Adhesive Composition

The rounded disc-shaped particles according to the exemplary embodiment can be added to an adhesive and used as an adhesive composition. The type of the resin contained in the adhesive is not limited and may be a resin with adhesiveness such as a urethane-based resin, an epoxy-based resin, a vinyl acetate-based resin, or an acrylic-based resin. The adhesion mechanism is also not limited and may be a chemical reaction type, solvent volatilization type, thermal melting type, thermal pressure type, or the like. The content of the rounded disc-shaped particles in the adhesive composition is preferably in a range from 5 mass% to 80 mass%, and more preferably in a range from 10 mass% to 50 mass%, to the whole adhesive composition. Setting the content of the rounded disc-shaped particles in the above range results in an adhesion composition more excellent in thermal conductivity, adhesiveness, water resistance, chemical resistance, and insulation. When the content of the rounded disc-shaped particles exceeds 80 mass%, adhesion strength may be insufficient. When the content of the rounded disc-shaped particles is less than 5 mass%, thermal conductivity may be insufficient.

The thermally conductive article and the thermally conductive material, such as the above-described gravure ink, coating liquid, resin composition, and adhesive composition are produced by the rounded disc-shaped particles according to the exemplary embodiment, and by using the thermally conductive article and the thermally conductive material, the rounded disc-shaped particles according to the exemplary embodiment can also be used as an electronic device that has heat dissipation (thermal conductivity) and has excellent chemical resistance, water resistance, and insulation. More specifically, the rounded disc-shaped particles according to the exemplary embodiment are usable for metal circuit boards, circuit boards, metal laminated boards, metal clad laminates with inner layer circuits, packaging materials for batteries, sealants, protective sheets, or the like. In addition, the rounded disc-shaped particles according to the exemplary embodiment are usable for adhesive sheets, heat dissipation sheets, heat dissipation coating agents, semiconductor sealants, adhesives, heat dissipation spacers, grease, or the like.

### Liquid Composition

A liquid composition according to the exemplary embodiment, which is used to form a thermally conductive thin film, contains a thermally conductive component including the above-described rounded disc-shaped particles, a film-forming resin, and a liquid medium. Preferably, the thermally conductive component further contains at least one selected from the group consisting of barium sulfate, talc, and boron nitride.

The content of the rounded disc-shaped particles in the liquid composition is preferably in a range from 5 mass% to 80 mass%, and more preferably in a range from 10 mass% to 70 mass%, to the whole liquid composition. The content of the thermally conductive component to 100 parts by mass of the film-forming resin is preferably in a range from 50 parts by mass to 600 parts by mass. The thermally conductive thin film formed using the liquid composition prepared as described above has excellent water resistance, chemical resistance, and insulation, retains strength, and is excellent in thermal conductivity.

The film-forming resin is at least one solvent soluble resin selected from the group consisting of an acrylic-based resin, a urethane-based resin, a urea-based resin, an epoxy-based resin, a rubber-based resin, a fluorine-based resin, a polyamide-based resin, a polyimide-based resin, a silicone-based resin, a cellulose-based resin, and a thermoplastic elastomer. The liquid medium is the same as that used in the coating liquid described above.

### Thermally Conductive Thin Film and Member for Electronic Device

The thermally conductive thin film according to the exemplary embodiment is a thin film formed by applying the above-described liquid composition. The thickness of the thermally conductive thin film is preferably in a range from 20 µm to 1,000 µm, more preferably in a range from 50 µm to 200 µm.

A member for an electronic device according to the exemplary embodiment includes a metal member and the above-described thermally conductive thin film disposed on a surface of the metal member.

Examples of the metal member include metal circuit boards, circuit boards, metal laminated boards, and metal clad laminates with inner layer circuits. Examples

In the following, the invention will be specifically described based on Examples, but the invention is not limited to the Examples. Note that "parts" and "%" in Examples and Comparatives are on a mass basis unless otherwise noted.

### Aluminum Raw Material

The following aluminum raw materials were used.
- boehmite: spherical, average particle size 3 µm
- aluminum hydroxide A: spherical, average particle size 6 µm
- aluminum hydroxide B: spherical, average particle size 10 µm
- aluminum hydroxide C: spherical, average particle size 1 µm

### Glass Frit

The following glass frits containing metal were used.
- glass frit A: deformation point 390 degrees C, containing silicon, boron, fluorine, etc.
- glass frit B: deformation point 460 degrees C, containing silicon, boron, fluorine, etc.
- glass frit C: deformation point 540 degrees C, containing silicon, boron, fluorine, etc.

### Production of Thermally Conductive Rounded Disc-Shaped Particles

### Example 1

A raw material mixture was obtained by putting 100 parts of the aluminum hydroxide A and one part of the glass frit A into a small mixer, then stirring and mixing. The resulting raw material mixture was fired at 1,200 degrees C for three hours in air and then disintegrated to produce thermally conductive rounded disc-shaped particles in powder form.

### Examples 2 to 28

The thermally conductive rounded disc-shaped particles in powder form were produced as in Example 1 above, except that the types and amounts of aluminum raw material, glass frit, and oxide raw material shown in Table 1 were used.

### Comparative 1

Power produced by firing 100 parts of the aluminum hydroxide A at 1,200 degrees C for two hours in air was used as a sample for Comparative 1.

### Comparative 2

A raw material mixture was obtained by mixing 100 parts of the aluminum hydroxide A and seven parts of the glass frit A in the same manner as in Example 1. Power produced by firing the resulting raw material mixture at 1,200 degrees C for two hours in air was used as a sample for Comparative 2.

### Comparative 3

Power produced by firing 100 parts of the boehmite at 1,200 degrees C for two hours in air was used as a sample for Comparative 3.

### Comparatives 4 to 9

The substances listed in Table 1 were used as samples for Comparatives 4 to 9, respectively.

**Table 1**

| | Aluminum raw material | | Glass frit | | Oxide raw material etc. | | Firing temperature (°C) |
|---|---|---|---|---|---|---|---|
| | Type | Amount (parts) | Type | Amount (parts) | Type | Amount (parts) | |
| Ex. 1 | Aluminum hydroxide A | 100 | Glass frit A | 1 | - | - | 1200 |
| Ex. 2 | Aluminum hydroxide A | 100 | Glass frit A | 1 | Sodium tungstate | 0.5 | 1200 |
| Ex. 3 | Aluminum hydroxide A | 100 | Glass frit A | 1 | Boric acid | 0.2 | 1200 |
| Ex. 4 | Aluminum hydroxide A | 100 | Glass frit B | 1 | - | - | 1200 |
| Ex. 5 | Aluminum hydroxide A | 100 | Glass frit C | 1 | Sodium tungstate | 0.4 | 1200 |
| Ex. 6 | Aluminum hydroxide A | 100 | Glass frit A | 1 | Bismuth oxide | 0.5 | 1200 |
| Ex. 7 | Aluminum hydroxide B | 100 | Glass frit A | 1 | - | - | 1250 |
| Ex. 8 | Aluminum hydroxide B | 100 | Glass frit B | 1 | - | - | 1250 |
| Ex. 9 | Aluminum hydroxide B | 100 | Glass frit A | 1.5 | - | - | 1150 |
| Ex. 10 | Aluminum hydroxide B | 100 | Glass frit C | 1 | Sodium tungstate | 0.4 | 1200 |
| Ex. 11 | Aluminum hydroxide B | 100 | Glass frit C | 1 | Bismuth oxide | 0.4 | 1200 |
| Ex. 12 | Aluminum hydroxide C | 100 | Glass frit A | 1 | - | - | 1200 |
| Ex. 13 | Aluminum hydroxide C | 100 | Glass frit A | 2 | Sodium tungstate | 0.4 | 1200 |
| Ex. 14 | Aluminum hydroxide C | 100 | Glass frit B | 1 | Boric acid | 0.5 | 1200 |
| Ex. 15 | Aluminum hydroxide C | 100 | Glass frit C | 2 | Sodium tungstate | 0.5 | 1200 |
| Ex. 16 | Boehmite | 100 | Glass frit A | 1 | - | - | 1250 |
| Ex. 17 | Boehmite | 100 | Glass frit B | 1 | - | - | 1200 |
| Ex. 18 | Boehmite | 100 | Glass frit B | 1 | Sodium tungstate | 0.4 | 1200 |
| | | | | | Boric acid | 0.2 | |
| Ex. 19 | Aluminum hydroxide A | 100 | Glass frit A | 1 | Sodium tungstate | 0.4 | 1150 |
| | | | | | Boric acid | 0.2 | |
| Ex. 20 | Aluminum hydroxide B | 100 | Glass frit B | 1 | Sodium tungstate | 0.5 | 1200 |
| | | | | | Boric acid | 0.1 | |
| Ex. 21 | Aluminum hydroxide A | 100 | Glass frit C | 1 | Sodium tungstate | 0.4 | 1200 |
| | | | | | Boric acid | 0.2 | |
| Ex. 22 | Aluminum hydroxide A | 100 | Glass frit B | 1 | Basic bismuth carbonate | 0.9 | 1200 |
| | | | | | Boric acid | 0.2 | |
| Ex. 23 | Aluminum hydroxide C | 100 | Glass frit A | 0.5 | Sodium tungstate | 0.4 | 1200 |
| | | | Glass frit C | 1.5 | | | |
| Ex. 24 | Aluminum hydroxide A | 100 | Glass frit A | 1 | Basic bismuth carbonate | 0.9 | 1200 |
| | | | | | Boric acid | 0.2 | |
| Ex. 25 | Aluminum hydroxide B | 100 | Glass frit A | 1 | Sodium tungstate | 0.4 | 1200 |
| | | | | | Titanium oxide | 0.5 | |
| Ex. 26 | Aluminum hydroxide C | 100 | Glass frit A | 1.3 | Sodium tungstate | 0.4 | 1200 |
| | | | | | Boric acid | 0.1 | |
| Ex. 27 | Aluminum hydroxide A | 100 | Glass frit B | 1 | Sodium metaphosphate | 0.3 | 1200 |
| Ex. 28 | Aluminum hydroxide B | 100 | Glass frit A | 1 | Sodium tungstate | 0.5 | 1200 |
| | | | | | Boric acid | 0.1 | |
| | | | | | Basic cobalt carbonate | 5 | |
| Comp. 1 | Aluminum hydroxide A | 100 | - | - | - | - | 1200 |
| Comp. 2 | Aluminum hydroxide A | 100 | Glass frit A | 7 | - | - | 1200 |
| Comp. 3 | Boehmite | 100 | - | - | - - | - | 1200 |
| Comp. 3 Comp. 4 | α-alumina (Commercialized product, average particle size 3 µm) | | | | | | |
| Comp. 5 | Plate-shaped alumina (Commercialized product, average particle size 5 µm) | | | | | | |
| Comp. 6 | Plate-shaped alumina (Commercialized product, average particle size 10 µm) | | | | | | |
| Comp. 7 | Plate-shaped alumina (Commercialized product, average particle size 15 µm) | | | | | | |
| Comp. 8 | Boron nitride (Commercialized product, average particle size 18 µm) | | | | | | |
| Comp. 9 | Aluminum nitride (Commercialized product, average particle size 10 µm) | | | | | | |

### Evaluation (1)

### Fillability

The powders produced in Examples 1 to 28 and Comparatives 1 to 9 were each evaluated for a maximum filling amount in an epoxy resin. In the evaluation method, each of the powders was gradually added to the epoxy resin while kneading with a spatula, and an addition amount when a lumpy state could no longer be maintained and a powdery state appeared was used as the maximum filling amount. Based on the maximum filling amount at this time, the following evaluation criteria were used to evaluate fillability. Table 2 shows the results.
AA: filling amount 80% or more
A: filling amount 75% or more and less than 80%
B: filling amount 70% or more and less than 75%
F: filling amount less than 70%

### Abrasion Moldability

Each resin composition obtained by mixing 30 parts of polypropylene (produced by Prime Polymer Co., Ltd., MFR: 20 g/10 min) and 70 parts of each thermally conductive oxide was placed in a plastomill and melt-kneaded at a set temperature of 200 degrees C. Each melt-kneaded product was then subjected to mold press molding at 175 degrees C using a 20 mm (length) × 20 mm (width) × 6 mm (height) mold, thereby preparing each test piece. Abrasiveness of the machine during production and a surface condition of each of produced molded bodies were observed, and the abrasion moldability was evaluated according to the following evaluation criteria. Table 2 shows the results.
A: no particular problem in abrasiveness and surface condition
B: problem in either abrasiveness or surface condition
F: problems both in abrasiveness and surface condition

### Average Particle Size, Average Thickness, and Aspect Ratio

The powders produced in Examples 1 to 28 and Comparatives 1 to 9 were each measured for the average particle size on Mastersizer 3000 (produced by Malvern Panalytical Ltd). Specifically, each of the powders was put into a 0.2% sodium metaphosphate solution and deflocculated for two minutes using an ultrasonic cleaner (ASU-6D, produced by AS ONE Corporation), followed by measurement. Table 2 shows the results.

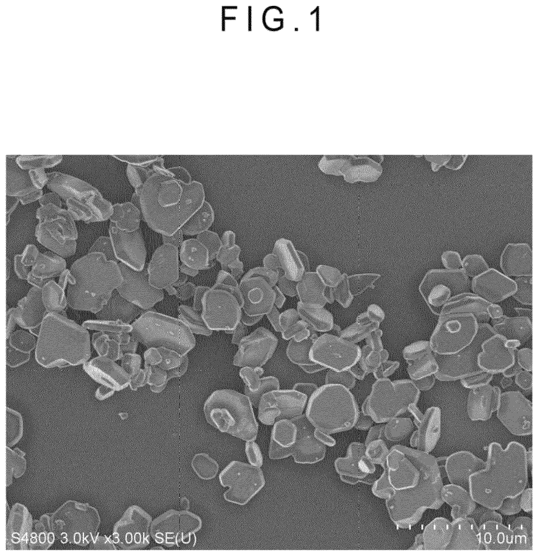

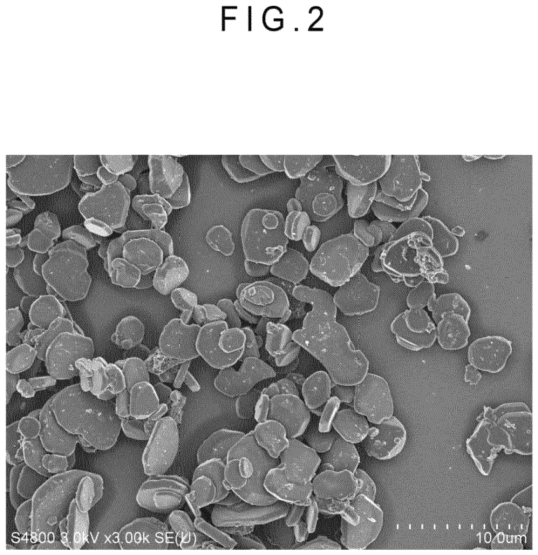

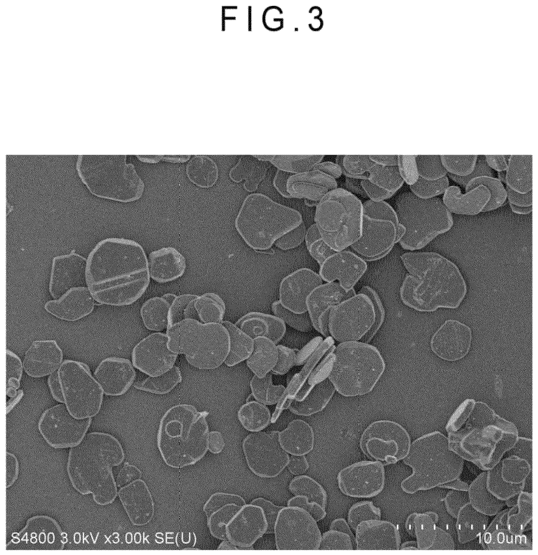

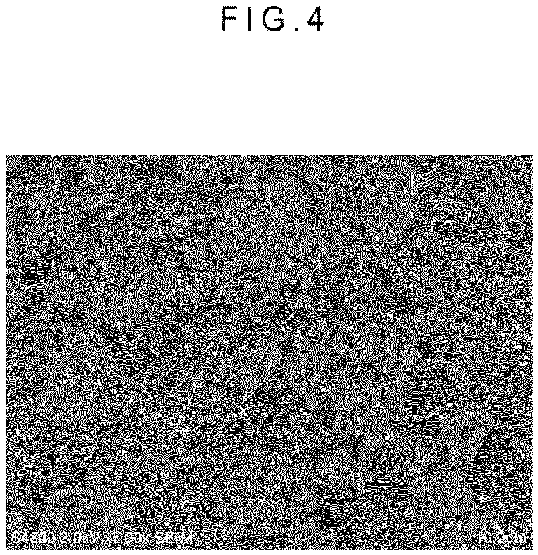

The powders produced in Examples 1 to 28 and Comparatives1 to 9 were each observed under an electron microscope and the average thickness was calculated for 10 particles. The particles selected for observation were those whose particle thickness was clear. Table 2 shows the results. Figs. 1 to 4 are electron micrographs of the powders produced in Examples 2, 19 and 26, and Comparative 2. In Comparatives 1 to 4, 8 and 9, the particle shape was disordered and the average thickness could not be measured, as shown in Fig. 4.

Further, the powder produced in Example 1 was observed under an electron microscope and the average particle size was calculated for 10 particles, and it was confirmed that this measurement value was almost identical to the value obtained using Mastersizer 3000.

For the powders produced in Examples 1 to 28 and Comparatives 1 to 4, 8 and 9, the aspect ratio (average particle size/average thickness) was calculated from the values of the average particle size and the average thickness. Table 2 shows the results.

### Measurement of Thermal Conductivity

Each resin composition obtained by kneading 30 parts of a mixed liquid of an epoxy resin (produced by Mitsubishi Chemical Group Corporation) and an amine curing agent (produced by DIC CORPORATION) and 70 parts of each thermally conductive oxide was mold-pressed to form a circular sheet molded product with a diameter of at least 100 mm and a thickness of at least 4 mm. Each molded product was then dried at a set temperature of 120 degrees C for 30 minutes, allowed to cool, and cut into four equal pieces to form a fan shape with a central angle of 90 degrees. Test pieces were thus prepared. The thermal conductivity of the prepared test pieces was measured using a thermophysical property measuring device by the hot-disk method (trade name "TPS-2500S", produced by Kyoto Electronics Manufacturing Co., Ltd). Table 2 shows the results.

### Insulation

The test pieces of the epoxy resin composition for evaluation, which were used to measure the thermal conductivity, were used to measure a volume electrical resistivity value using an electrical resistivity meter. From the measurement results, insulation was evaluated according to the following evaluation criteria. Table 2 shows the results.
A: volume electrical resistivity value of 10¹⁰ Ω•cm or more
B: volume electrical resistivity value of 10⁵ Ω•cm or more and less than 10¹⁰ Ω•cm
F: volume electrical resistivity value of less than 10⁵ Ω•cm

**Table 2**

| | Fillability | Abrasion moldability | Insulation | Average particle size (µm) | Average thickness (µm) | Aspect ratio | Thermal conductivity (W/m·K) |
|---|---|---|---|---|---|---|---|
| Ex. 1 | AA | A | A | 3.2 | 0.6 | 5.3 | 1.04 |
| Ex. 2 | AA | A | A | 3.6 | 0.6 | 6.0 | 1.05 |
| Ex. 3 | AA | A | A | 4.1 | 0.7 | 5.9 | 1.01 |
| Ex. 4 | A | A | A | 4.9 | 0.4 | 12.3 | 1.13 |
| Ex. 5 | A | A | A | 5.7 | 0.5 | 11.4 | 1.01 |
| Ex. 6 | AA | A | A | 5.4 | 1.3 | 4.2 | 0.94 |
| Ex. 7 | AA | A | A | 3.9 | 0.5 | 7.8 | 0.97 |
| Ex. 8 | AA | A | A | 4.1 | 0.4 | 10.3 | 1.28 |
| Ex. 9 | AA | A | A | 5.4 | 0.8 | 6.8 | 1.05 |
| Ex. 10 | AA | A | A | 5.0 | 0.4 | 12.5 | 1.22 |
| Ex. 11 | AA | A | A | 5.2 | 1.0 | 5.2 | 1.03 |
| Ex. 12 | A | A | A | 6.4 | 0.5 | 12.8 | 1.22 |
| Ex. 13 | AA | A | A | 8.6 | 0.9 | 9.6 | 1.05 |
| Ex. 14 | AA | A | A | 10.7 | 0.3 | 35.7 | 1.11 |
| Ex. 15 | A | A | A | 19.7 | 0.8 | 24.6 | 1.18 |
| Ex. 16 | A | A | A | 1.2 | 0.4 | 3.0 | 0.91 |
| Ex. 17 | A | A | A | 2.8 | 0.3 | 9.3 | 0.96 |
| Ex. 18 | A | A | A | 4.1 | 0.4 | 10.3 | 1.02 |
| Ex. 19 | AA | A | A | 3.4 | 0.5 | 6.8 | 0.92 |
| Ex. 20 | AA | A | A | 3.6 | 0.7 | 5.1 | 1.17 |
| Ex. 21 | AA | A | A | 5.7 | 0.6 | 9.5 | 1.13 |
| Ex. 22 | AA | A | A | 6.9 | 1.1 | 6.3 | 0.98 |
| Ex. 23 | AA | A | A | 16.3 | 0.8 | 20.4 | 1.23 |
| Ex. 24 | AA | A | A | 5.7 | 1.5 | 3.8 | 1.07 |
| Ex. 25 | AA | A | A | 3.1 | 0.5 | 6.2 | 1.09 |
| Ex. 26 | AA | A | A | 8.6 | 1.0 | 8.6 | 1.12 |
| Ex. 27 | AA | A | A | 2.8 | 0.4 | 7.0 | 1.05 |
| Ex. 28 | AA | A | A | 2.6 | 0.6 | 4.3 | 0.94 |
| Comp. 1 | F | B | A | 2.3 | - | - | No kneading |
| Comp. 2 | B | B | A | 4.6 | - | - | 1.10 |
| Comp. 3 | F | B | A | 2.2 | - | - | No kneading |
| Comp. 4 | AA | A | A | 3.0 | - | - | 0.85 |
| Comp. 5 | F | B | A | 5.0 | 0.1 | 50.0 | No kneading |
| Comp. 6 | B | B | A | 10.0 | 0.15 | 66.7 | 1.17 |
| Comp. 7 | F | B | A | 15.0 | 0.07 | 214.3 | No kneading |
| Comp. 8 | F | B | A | 18.0 | - | - | No kneading |
| Comp. 9 | AA | F | A | 10.0 | - | - | 1.33 |

### Reference Example

In measuring the thermal conductivity, 60 parts of the powder produced in Example 21 and 10 parts of Example 3 of Patent No. 6,209,695 were used for 70 parts of the thermally conductive oxide to prepare a test piece. As a test method for thermal conductivity, a resin composition obtained by mixing 30 parts of polypropylene (produced by Prime Polymer Co., Ltd., MFR: 20 g/10 min) and 70 parts of the thermally conductive oxide was placed in a plastomill and melt-kneaded at a set temperature of 200 degrees C.

The melt-kneaded product was then subjected to mold press molding at 175 degrees C using a 20 mm (length) × 20 mm (width) × 6 mm (height) mold, thereby preparing a test piece. The thermal conductivity of the prepared test piece was measured using a thermophysical property measuring device (trade name "TPS-2500S", produced by Kyoto Electronics Manufacturing Co., Ltd.). In this reference example, the fillability was AA, the abrasion moldability was A, the insulation was A, and the thermal conductivity was 1.12 W/m•K Mixing particles of different shapes gave results within the ranges of Examples, almost the same as when only the rounded disc-shaped particles were used.

### Preparation and Evaluation of Coating Liquid

### Application Example 1, Comparative Application Example 1

Each coating liquid was prepared by mixing 15 parts of the powder (thermally conductive oxide) produced in each of Example 21 and Comparative 4, 62 parts of a urethane resin having a viscosity of 3,500 mPa•s, and 23 parts of ethyl acetate, and dispersing each mixture with a disper. After evenly applying each of the prepared coating liquids to release paper with a glass rod, it was placed in an oven at 100 degrees C for two minutes to evaporate the solvent, forming each coating film with a thickness of 50 µm (Application Example 1, Comparative Application Example 1). The thermal conductivity of the coating film in Comparative Application Example 1, which was formed using the α-alumina in Comparative 4, was 0.29 W/m•K In contrast, the thermal conductivity of the coating film in Application Example 1, which was formed using the thermally conductive oxide in Example 21, was found to be high, 0.36 W/m•K In addition, the coating liquid prepared using the thermally conductive oxide in Example 21 was applied to a nylon film for an exterior material of batteries using a gravure coater, and was used as a top coat for the exterior material of batteries. As a result, it was found that heat could be dissipated effectively, and the temperature increase in the battery could be reduced.

### Preparation and Evaluation of Adhesive

### Application Example 2, Comparative Application Example 2

Each dispersion liquid was prepared by mixing 35 parts of the powder (thermally conductive oxide) produced in each of Example 21 and Comparative 4 and 65 parts of polyester polyol having a viscosity of 300 mPa•s, and dispersing each mixture with a disper. There were mixed 98 parts of each of the prepared dispersion liquids and 2 parts of polyisocyanate having a viscosity of 2,600 mPa•s, and each mixture was stirred with a dissolver to obtain each urethane resin-based chemical reaction-type adhesive. After evenly applying each of the prepared adhesives to release paper with a glass rod, it was placed in an oven at 100 degrees C for two minutes to evaporate the solvent. In addition, it was placed in an oven at 40 degrees C for 96 hours to form a cured film of each of the adhesives (Application Example 2, Comparative Application Example 2). The thermal conductivity of the cured film in Comparative Application Example 2, which was formed using the α-alumina in Comparative 4, was 0.53 W/m•K In contrast, the thermal conductivity of the cured film in Application Example 2, which was formed using the thermally conductive oxide in Example 21, was found to be high, 0.63 W/m•K

### Production of Liquid Composition

### Application Example 3, Comparative Application Example 3

Each dispersion liquid was obtained by mixing 20 parts of the powder (thermally conductive oxide) produced in each of Example 21 and Comparative 4, 63 parts of a polyurethane resin as a film-forming resin (trade name "SANPRENE IB-1700D", produced by Sanyo Chemical Industries, Ltd., a resin content of 30%, a solvent content of 70%), and 17 parts of a mixed solvent of methyl ethyl ketone, toluene, and isopropyl alcohol as a solvent, and stirring each mixture with a paint shaker (using glass beads, 2mm in diameter). To 100 parts of each resultant dispersion liquid was added 3 parts of a polyisocyanate resin (trade name: "TAKENATE D-160N", produced by Mitsui Chemicals, Inc., a resin content of 75%, a solvent content of 25%), followed by stirring to obtain each liquid composition (Application Example 3, Comparative Application Example 3).

### Evaluation (2)

### Formation of Coating Film for Evaluation

After applying each liquid composition to release paper using a multi coater (trade name "K-303", produced by RK Print Coat Instruments Ltd.), the solvent was removed by hot air drying. Next, it was subjected to aging in a dryer at 40 degrees C for 48 hours to form each coating film for evaluation having a concentration of the thermally conductive component (filler) of 48% and a film thickness of approximately 100 µm.

### Measurement of Thermal Conductivity (Thin Film)

Each coating film for evaluation was cut out to a test piece having a size of 40 mm in length × 40 mm in width. The thermal conductivity of each of the obtained test pieces was measured using a "thin film measuring module" of a thermophysical property measuring device (trade name "TPS-2500S", produced by Kyoto Electronics Manufacturing Co., Ltd.). The thermal conductivity of the cured film in Comparative Application Example 3, which was formed using the α-alumina in Comparative 4, was 0.33 W/m•K In contrast, the thermal conductivity of the cured film in Application Example 3, which was formed using the thermally conductive oxide in Example 21, was found to be high, 0.53 W/m•K.

### Measurement of Thermal Conductivity (Block)

Each resin composition obtained by mixing 50 parts of polypropylene (produced by Prime Polymer Co., Ltd., MFR: 20 g/10 min) and 50 parts of each thermally conductive component was placed in a plastomill and melt-kneaded at a set temperature of 200 degrees C. Each melt-kneaded product was then subjected to mold press molding at 175 degrees C using a 20 mm (length) x 20 mm (width) x 6 mm (height) mold, thereby preparing each test piece. The thermal conductivity of each of the obtained test pieces was measured using a "standard isotropy measuring module" of the thermophysical property measuring device (trade name "TPS-25005", produced by Kyoto Electronics Manufacturing Co., Ltd.). The thermal conductivity of Comparative Application Example 3, which was formed using the α-alumina in Comparative 4, was 0.47 W/m•K In contrast, the thermal conductivity of Application Example 3, which was formed using the thermally conductive oxide in Example 21, was found to be high, 0.62 W/m•K

### Chemical Resistance

Each coating film for evaluation was cut out to a test piece having a size of 40 mm in length × 40 mm in width ×100 µm in thickness. Each of the obtained test pieces was immersed in each of 5% hydrochloric acid, a 5% sulfuric acid aqueous solution, a 5% nitric acid aqueous solution, and a 5% sodium hydroxide aqueous solution, and stirred once a day and left to stand for one week. The mass of the test piece before the immersion and the mass of the test piece after the immersion were measured, and a mass change rate (%) was calculated based on the mass of the test piece before immersion to evaluate the chemical resistance according to the following evaluation criteria. The results were all A for both Application Example 3 and Comparative Application Example 3.
A: mass change rate of less than 5%
B: mass change rate of 5% or more and less than 20%
F: mass change rate of 20% or more

### Adhesiveness

Using a bar coater #5, each liquid composition was applied on corona-treated surfaces (treated PET, treated NY) and non-treated surfaces (non-treated PET, non-treated NY) of a biaxially oriented polyester film (trade name "ESTER Film E-5102", produced by Toyobo Co., Ltd.) and a biaxially oriented nylon film (trade name "HARDEN Film N1102, produced by Toyobo Co., Ltd.). The solvent was removed by hot air drying, and aging was performed in a dryer at 40 degrees C for 48 hours to prepare each test piece having a thin film on the film surface. A cellophane tape (trade name "CELLOTAPE (registered trademark)", produced by Nichiban Co., Ltd., 24 mm in width) was adhered to a surface of the thin film of each test piece, and the operation of peeling it in a vertical direction was performed three times at the same point. Thereafter, the condition of each thin film was checked to evaluate the adhesiveness according to the following evaluation criteria. The results were all A for both Application Example 3 and Comparative Application Example 3.
A: no peeling
B: some peeling
F: mostly peeled off

## Claims

1. Alumina-based thermally conductive rounded disc-shaped particles being particles of an alumina-based thermally conductive oxide obtained by firing a raw material mixture comprising an aluminum raw material and a glass frit, the raw material mixture containing no boron compound,
the aluminum raw material being at least one selected from the group consisting of boehmite and aluminum hydroxide,
a deformation point of the glass frit being in a range from 300 degrees C to 800 degrees C,
a content of the glass frit in the raw material mixture being in a range from 0.5 parts by mass to 5 parts by mass, to 100 parts by mass of the aluminum raw material, and
primary particles of the alumina-based thermally conductive oxide having an average particle size in a range from 1 µm to 50 µm, having an average thickness in a range from 0.1 µm to 5 µm, having an aspect ratio of more than 1 and 50 or less, and having a rounded disc shape.

2. The alumina-based thermally conductive rounded disc-shaped particles according to claim 1, wherein
the raw material mixture further contains an oxide raw material other than the glass frit, and
the oxide raw material contains at least one selected from the group consisting of a titanium compound, a phosphorus compound, a tungsten compound, and a bismuth compound.

3. The alumina-based thermally conductive rounded disc-shaped particles according to claim 1, wherein the alumina-based thermally conductive oxide is colored by containing at least one element selected from the group consisting of iron, cobalt, copper, manganese, and nickel.

4. The alumina-based thermally conductive rounded disc-shaped particles according to claim 1, wherein the glass frit contains no lead.

5. A method of producing the alumina-based thermally conductive rounded disc-shaped particles according to any one of claims 1 to 4, the method comprising:
mixing a glass frit and at least one aluminum raw material selected from the group consisting of boehmite and aluminum hydroxide to obtain a raw material mixture; and
firing the raw material mixture, wherein
a content of the glass frit in the raw material mixture is in a range from 0.5 parts by mass to 5 parts by mass, to 100 parts by mass of the aluminum raw material, and
in the firing of the raw material mixture, the raw material mixture is fired in a range from 1,000 degrees C to 1,400 degrees C in air.

6. A thermally conductive composition comprising the alumina-based thermally conductive rounded disc-shaped particles according to any one of claims 1 to 4, and a thermally conductive filler.

7. An article comprising the alumina-based thermally conductive rounded disc-shaped particles according to any one of claims 1 to 4.

8. The article according to claim 7, further comprising a thermally conductive filler.

9. The article according to claim 7, wherein the article is any of a gravure ink, a coating liquid, a resin composition, and an adhesive composition.

10. A liquid composition used to form a thermally conductive thin film, the liquid composition comprising a thermally conductive component containing the alumina-based thermally conductive rounded disc-shaped particles according to any one of claims 1 to 4, a film-forming resin, and a liquid medium.

11. The liquid composition according to claim 10, wherein
the thermally conductive component further contains a thermally conductive filler, and
the thermally conductive filler is at least one selected from the group consisting of barium sulfate, talc, and boron nitride.

12. The liquid composition according to claim 10, wherein a content of the thermally conductive component to 100 parts by mass of the film-forming resin is in a range from 50 parts by mass to 600 parts by mass.

13. The liquid composition according to claim 10, wherein the film-forming resin is at least one solvent soluble resin selected from the group consisting of an acrylic-based resin, a urethane-based resin, a urea-based resin, an epoxy-based resin, a rubber-based resin, a fluorine-based resin, a polyamide-based resin, a polyimide-based resin, a silicone-based resin, a cellulose-based resin, and a thermoplastic elastomer.

14. A thermally conductive thin film formed by applying the liquid composition according to claim 10.

15. A member for an electronic device, comprising a metal member and the thermally conductive thin film according to claim 14, the thermally conductive thin film being disposed on a surface of the metal member.
